# EUROPEAN PATENT APPLICATION

(11) **EP 1 369 324 A2**
(43) Date of publication of application: **10.12.2003**
(21) Application number: 03011147.0
(22) Date of filing: 23.05.2003
(51) Int. Cl.: B60R 25/02

(54) **Anti-theft device for motor-vehicles**

(30) Priority: 31.05.2002 IT BO20020342
(71) Applicant: I.P. INNOVATIVE PRODUCTS s.r.l., I-48022 Lugo (Ravenna) (IT)
(72) Inventor: Cartuccia, Giovanni, 48022 Lugo (RA) (IT)
(74) Representative: La Ciura, Salvatore

(57) **Abstract**

A anti-theft device (1) for motor-vehicles is provided with two half-shells (3, 4) which can be coupled each other in a closing layout (P1) to define a hollow casing (5) apt to contain a part of the steering-wheel and a lock (19) to lock the half-shells (3) in the above mentioned closing layout (P1), wherein the casing (5) shows a substantially rectangular opening (8), destined to be crossed by a steering-wheel spoke and two other substantially pentagonal openings (9, 10), destined to be crossed by respective portions of the crown of the steering-wheel (2) [Fig.2].

## Description

This invention concerns an anti-theft device for motor-vehicles.

In particular this invention concerns an anti-thief device to be applied to a motor-vehicle steering-wheel to avoid the use of the said steering-wheel.

Anti-theft devices are known comprising two circular half-shells having an internal diameter at least equal to the steering-wheel diameter and which can be coupled each other in a closing layout to define a casing apt to contain and cover the said steering-wheel. The reciprocal locking of the two half-shells in the closing layout is guaranteed by a safety lock or even simply by a pin, a key padlock is fitted into.

The application to the steering-wheel of an anti-theft device similar to the above described type results to be almost difficult since it requires the composition of the casing by the union of the two half-shells which, owing to their considerable overall dimensions, result to be insufficiently wieldy. Furthermore the half-shells being generally realized with anti-breaking materials with an high specific weight, a considerable effort is required to the user for their assembly and disassembly. In addition there is the risk of an accidental fall of one of the half-shells or both the shells, during the above mentioned assembly and disassembly operations.

The device, when put away, shows remarkable overall dimensions, substantially equal to the steering-wheel, which renders difficult its placement inside the motor-vehicle, in particular, under a seat or inside a glove compartment, which could be a comfortable position.

Object of this invention is to realize an improved anti-theft device which shows limited weight and overall dimensions and allows easy and quick operations of assembly to the steering-wheel and disassembly therefrom.

In compliance with this invention, an anti-theft device is shown as specified in claim 1.

The dependent claims refer to preferred and advantageous executive embodiments of the invention.

Executive embodiments of this invention, by way of a not limitative example, are shown hereinafter with the support of the enclosed drawings, wherein:
- Fig. 1 shows an anti-theft device realized in compliance with this invention and coupled to a steering-wheel of a motor-vehicle;
- Fig. 2 shows the anti-theft device of Fig. 1 in a closing layout;
- Fig. 3 shows the anti-theft device of Fig. 2 in a opening layout.

Referring to the figures of the enclosed drawings, reference 1 indicates the whole anti-theft device coupled with a steering-wheel 2 of a motor-vehicle (not shown).

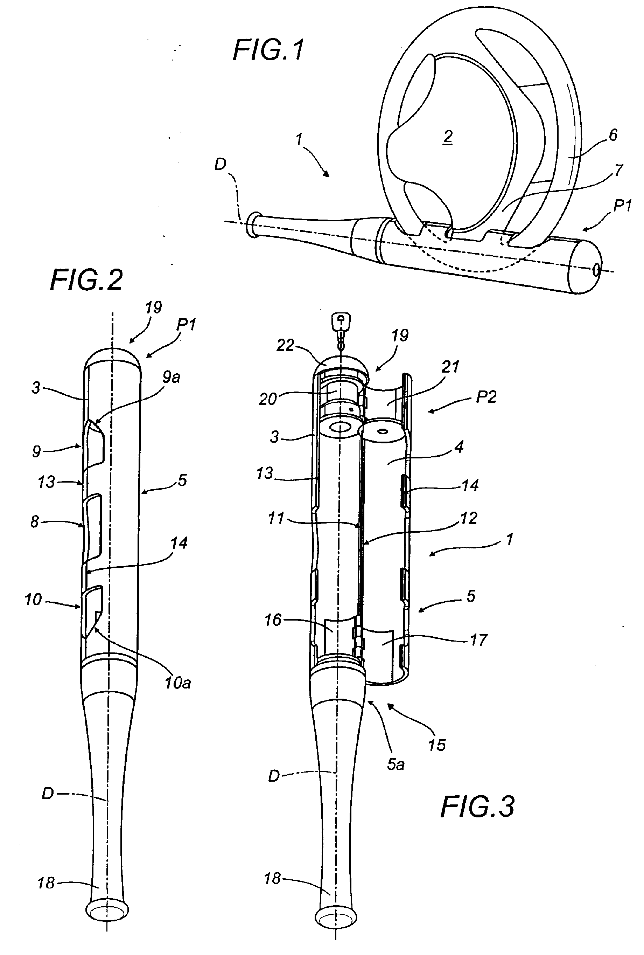

The device 1 shows an elongated form in a prevailing axial direction D and, in the executive position shown in Fig. 1, holds a portion of the steering-wheel 2 and extends tangentially from the latter of such a length to limit or prevent, with its overall dimensions, the rotation of the said steering-wheel 2.

The device 1 comprises two half-shells 3 and 4, which can be coupled in a closing layout P1 (fig. 1 and 2) to define a hollow casing, substantially cylindrical and apt to contain the part of the steering-wheel 2 where the crown 6 and a spoke 7 of the steering wheel are connected each other.

As better shown in Fig. 2, the casing 5, in the above closing layout P1, shows an opening 8 apt to be crossed by the spoke 7 and two openings 9 and 10 apt to be crossed by respective portions of the crown 6. The opening 8 shows a substantially rectangular form and is placed centrally between the openings 9 and 10, which both show a substantially pentagonal form. More precisely, the openings 9 and 10 are placed symmetrically with respect to the opening 8 and show from the opposite side of the opening 8, respective V-shaped edges 9a and 10a with the vertex directed towards the respective longitudinal ends of the casing 5.

As shown in Fig. 3, wherein the device 1 is in the opening layout P2, the half-shells 3 and 4 are hinged each other along the respective first longitudinal lateral edges parallelly towards the direction D and both are laterally delimited by respective second longitudinal edges 13 and 14, which are substantially parallel to the edges 11 and 12 and shaped to define, the one in co-operation with the other, the openings 8, 9 and 10 in the above closing layout P1.

Between the half-shells 3 and 4, in correspondence with the edges 11 and 12, elastic means 15 are interposed apt to maintain the casing 5 in the above mentioned opening layout P2. In particular the elastic means 15 consist of two resilient foils 16 and 17, which are placed in correspondence with a longitudinal end 5a of the casing and are interposed between the half-shells, so that the foil 16 operates in contact with the inner face of the half-shell 3 and the foil 17 operates in contact with the inner face of the half-shell 4.

The device 1 comprises further an elongated handle 18, which is supported by the half-shell 3 and extends from the end 5a of the casing 5 in the above mentioned direction D of prevailing development. Alternatively, the handle 18 can be defined by an elongated and shaped appendix of a half-shell 3, 4 or two elongated and shaped appendixes of the respective half-shells 3 and 4. In all the cases, the handle 18, besides to furnish a grip of the device 1, determines such overall dimensions to delimit or prevent, as already told, the rotation of the steering-wheel 2 when the device 1 is coupled thereto.

The device 1 comprises at last locking means 19 to lock the half-shells 3 and 4 in the closing layout P1 against the antagonist action of the foils 16 and 17. These locking means 19 are placed from the opposed side of the handle 18 as regards the casing 5 and comprise two elements 20 and 21 coupled each other and held by the respective half-shells 3 and 4 in correspondence with their ends opposed to the handle 18.

E.g. these two elements 20, 21 can comprise two steel disks, fastened to the half-shells 3, 4 respectively and having a central bore for the insertion of a lock pin.

The element 20 defines a cap 22 closing the casing 5, which cap has a key lock of known type so that the closure of the casing 5 takes place by release, without the need to use the key, by pressing a half-shell 13, 14 close to the other against the antagonist action of the foils 16 and 17. The key lock is apt to lock the elements 20 and 21 one against to other in the closing layout P1.

The invention has the following advantages.

According to figures 1, 2 and 3 concerning the above mentioned example, the cap 21, the casing 5 and the handle 18 give the device, in the closing layout P1, a form similar to a baseball bat, particularly advantageous to house the device 1 in little spaces, for example under a seat or inside a glove compartment.

When the anti-theft device according to this invention is used on the steering-wheel, it results visible because of its form and length and therefore it is a deterrent in case of theft.

The installation of the anti-theft device, according to this invention, results to be easy and quick since the half-shell closure can take place without the need to operate the locking means 19 with the corresponding key.

Also the disassembly of the anti-theft device, according to this invention, results to be easy, since once the locking means 19 are operated, the elastic means tend to immediately take the casing 5 in the opening layout P2 and therefore the anti-theft device can be removed from the steering-wheel.

Finally, both the installation and the disassembly of the anti-theft device, according to this invention, can be made by the user with a sole hand, rendering therefore very functional and quick the use of the anti-theft device.

The described invention can be subject to changes and variances without departing from the inventive scope defined by the claims.

Furthermore all the details can be replaced by technically equivalent elements.

## Claims

1. Anti-theft device for motor-vehicles comprising two half-shells (3 and 4), which can be coupled each other in a closing layout (P1) to define a hollow casing (5) apt to contain, at least in part, a steering-wheel (2), locking means (19) to lock the half-shells (3 and 4) in the closing layout (P1); the device (1) being **characterized in that** the casing (5), in the closing layout (P1), shows at least a first opening (8), apt to be crossed by a spoke (7) of the steering-wheel and at least a second and third opening (9 and 10), apt to be crossed by respective portions of the crown (6) of the steering-wheel (2); the said device showing at least such an elongated end to limit or prevent the steering-wheel rotation, when the device is installed.

2. Anti-theft device according to claim 1, **characterized in that** the casing (5) shows an elongated form according to a prevailing development direction (D); the first opening (8) being placed in a position intermediate between the second and the third opening (9 and 10).

3. Anti-theft device according to claim 1 or 2, **characterized in that** the said first, second and third openings (8, 9, 10) are reciprocally positioned in such a way that the casing (5), when it closes a part of the steering-wheel (2) in the closing layout (P1), results to be placed substantially tangent to the said steering-wheel (2).

4. Anti-theft device according to any of the previous claims, **characterized in that** at least one of the half-shells (3 and 4) shows, in the prevailing development direction (D), an appendix elongated in the said direction (D) to limit or prevent the rotation of the steering-wheel (2).

5. Anti-theft device according to claim 4, **characterized in that** the said appendix is shaped to define a handle (18).

6. Anti-theft device according to any of the previous claims, **characterized in that** it comprises a elongated handle (18); the said handle (18) being supported by one of the half-shells (3 and 4) and extending from the relevant supporting half-shell (3, 4) in the prevailing development direction (D) to limit or prevent the rotation of the steering-wheel (2).

7. Anti-theft device according to any of the previous claims, **characterized in that** the casing (5) shows a substantially cylindrical form.

8. Anti-theft device according to any of the previous claims, **characterized in that** the half-shells (3 and 4) are hinged each other along the respective first longitudinal edges (11 and 12) which extend parallelly to the said prevailing development direction (D).

9. Anti-theft device according to claim 8, **characterized in that** at least one of the half-shells (3, 4) shows a second edge (13, 14) substantially parallel to the respective first edge (11, 12) and shaped to define, with the other half-shells (3, 4) the said first, second and third opening (8, 9, 10) in the closing layout (P1).

10. Anti-theft device according to claim 8 or 9, **characterized in that** it comprises elastic means (15) interposed between the said half-shells (3, 4) in correspondence with the first longitudinal edges (11, 12) and apt to maintain the casing (5) in an opening layout (P2), so that when the locking means (19) are locked, the elastic means (15) tend to immediately take the casing (5) in the opening layout (P2), so that the anti-theft device can be removed from the steering-wheel by the user with a sole hand.

11. Anti-theft device according to claim 10, **characterized in that** the elastic means (15) comprise at least a resilient foil (16, 17) interposed between the half-shells (3, 4) in correspondence with the first longitudinal edges (11, 12).

12. Anti-theft device according to any of the previous claims, **characterized in that** it comprises a handle (18) placed at the opposite side of the locking means (19) with respect to said casing (5).

13. Anti-theft device according to any of the previous claims, **characterized in that** it comprises locking means (19) provided with a snap, so that the closure of the casing (5) takes place by release, without the need to use the key, by pressing a half-shell (13, 14) close to the other against the antagonist action of the elastic means (15), therefore the anti-theft can be installed by the user with a sole hand.

14. Anti-theft device according to claims 12 or 13, **characterized in that** the locking means (19) comprise two elements (20, 21) which can be coupled each other and held by the respective half-shells (3, 4) in correspondence with their ends opposed to the handle (18); the first of the elements (20, 21) defining a cap (22) for the closure of the casing (5) placed in the opposed side of the handle (18); the cap (22) being provided by a key lock apt to lock the two elements (20, 21) each other in the closing layout (P1).

15. Anti-theft device according to any of the previous claims, **characterized in that** the first opening (8) shows a substantially rectangular form, while the second and third opening (9, 10) show a substantially pentagonal form.

16. Anti-theft device according to claim 15, **characterized in that** the second and third opening (9, 10) are placed symmetrically as regards the first opening (8).

17. Anti-theft device according to claim 16, caracterized in that the second and third opening (9, 10) show from the opposed side of the first opening (8), respective V-shaped edges (9a, 10a) with the vertex directed towards the respective longitudinal ends of the casing (5).

18. Anti-theft device for motor-vehicles according to claim 14, **characterized in that** said locking elements (20, 21) comprise two disks fastened to the half-shells (3, 4) respectively, said disks having a central bore for the insertion of a locking pin.
